# FASCICULE DE BREVET EUROPEEN

(11) **EP 3 423 262 B1**
(45) Date de publication et mention de la délivrance du brevet: **26.02.2020**
(21) Numéro de dépôt: 17706524.0
(22) Date de dépôt: 23.01.2017
(51) Int. Cl.: B29C 70/38, B29C 37/00, B29C 31/08

(54) **MACHINE D'APPLICATION DE FIBRES COMPRENANT UN CONVOYEUR A BANDE ET PROCEDE DE REALISATION DE PIECES METTANT EN OEUVRE UNE TELLE MACHINE**
FASERAPPLIKATIONSMASCHINE MIT BANDFÖRDERER UND VERFAHREN ZUR HERSTELLUNG VON TEILEN UNTER VERWENDUNG SOLCH EINER MASCHINE
FIBRE APPLICATION MACHINE COMPRISING A BELT CONVEYOR, AND METHOD FOR PRODUCING PARTS USING SUCH A MACHINE

(30) Priorité: 04.03.2016 FR 1670082
(43) Date de publication de la demande: 09.01.2019
(73) Titulaire: Coriolis Group, 56530 Quéven (FR)
(72) Inventeur: CAFFIAU, Johann, 56700 Hennebont (FR); HAMLYN, Alexander, 56270 Ploemeur (FR); WEBER, Jean, Philippe, 56270 Ploemeur (FR)
(86) Numéro de dépôt international: PCT/FR2017/000015
(87) Numéro de publication internationale: WO 2017/149209

(56) Documents cités:
- WO-A1-2012/126815
- US-A- 4 938 824
- US-B2- 9 023 176

## Description

La présente invention concerne une machine d'application de fibres pour la réalisation de pièces en matériau composite, et un procédé de réalisation de pièces en matériau composite correspondant.

Il est connu des machines d'application de fibres pour la réalisation de pièces en matériau composite comprenant un support d'application comprenant une surface d'application, notamment un outillage de drapage tel qu'une plaque montée sur table, une tête d'application de fibres avec un système de compactage comprenant au moins un rouleau d'application pour l'application au contact de fibres sur la surface d'application pour réaliser une pièce ou préforme, et un système de déplacement apte à effectuer un déplacement relatif de tête par rapport à la surface d'application pour effectuer l'application de fibres sur la surface d'application.

Les fibres utilisées dans ce type d'application au contact, classiquement appelée placement de fibres ou placement de bandes, peuvent être des fibres pré-imprégnées d'un polymère thermoplastique ou thermodurcissable, ou des fibres sèches munies d'un liant ou « binder ». Les préformes sont réalisées par superposition de plusieurs plis de fibres dans des orientations différentes.

L'outillage de drapage est souvent recouvert d'un film polymère permettant l'accroche du premier pli. Une fois le placement des différents plis réalisé, il est nécessaire de décoller la préforme du film d'accroche. Les opérations d'application et maintien du film sur l'outillage, de démoulage de la préforme, et de décollement du film de la préforme sont manuelles. Pour cette raison, les temps de cycle de ces opérations manuelles sont trop importants et ne permettent pas d'atteindre des cadences de production élevées. De plus, ces différentes opérations nécessitent différents postes et différents transferts qui nécessitent de l'espace en plus du poste de placement de fibres. Ces inconvénients sont particulièrement limitants dans le cas où il est envisagé un drapage plan pour la réalisation de préformes planes en grande série.

Le document US 4,938,824 décrit une machine d'application de fibres selon le préambule de la revendication 1.

L'invention a ainsi pour but de proposer une solution visant à pallier au moins l'un des inconvénients précités.

A cet effet, l'invention a pour objet une machine d'application de fibres pour la réalisation de pièces en matériau composite comprenant
- un support d'application comprenant une surface d'application,
- une tête d'application de fibres avec un système de compactage comprenant au moins un rouleau d'application pour l'application au contact de fibres la une surface d'application pour réaliser une pièce ou préforme, et de préférence des moyens de guidage pour guider les fibres sur le rouleau d'application, et
- un système de déplacement apte à effectuer un déplacement relatif de tête par rapport à la surface d'application pour effectuer l'application de fibres sur la surface d'application,
ledit support d'application comprend un convoyeur à bande principal comprenant
- une bande sans fin montée entre au moins deux systèmes de renvoi, dont au moins un système de renvoi motorisé, ladite bande comprenant un brin supérieur constituant ladite surface d'application, et
- une plaque disposée entre les deux systèmes de renvoi sur laquelle le brin supérieur repose lors de l'application de fibres,
ladite machine comprenant une unité de commande apte à commander le système de renvoi motorisé pour évacuer de la bande sans fin la ou les pièces présentes sur ladite bande sans fin, le système de déplacement comprenant un système d'entraînement en rotation apte à entraîner en rotation le convoyeur à bande principal autour d'un axe vertical, l'unité de commande maintenant de préférence le système de renvoi motorisé à l'arrêt lors de l'application des fibres.

Selon l'invention, la machine comprend un convoyeur à bande sur le brin supérieur duquel sont directement appliquées les fibres, le convoyeur étant motorisé pour permettre l'évacuation de la pièce. Le brin supérieur définit de préférence une surface d'application plane ou sensiblement plane. La machine selon l'invention facilite l'opération de démoulage de la pièce de la surface de drapage et permet ainsi d'augmenter les cadences de production de pièces en matériau composite.

La bande sans fin est avantageusement arrêtée durant le drapage. Les dimensions du brin supérieur en longueur et en largeur définissent la zone de drapage de la machine d'application.

La bande sans fin sera avantageusement choisie en fonction des fibres à appliquer pour faciliter l'accrochage du premier pli, ainsi que le démoulage. A titre d'exemple, la bande sans fin est formée d'une bande métallique polie ou texturée, d'une bande revêtue ou constituée d'un polymère adéquat permettant l'accroche du premier pli.

Les fibres sont de préférence des fibres continues unidirectionnelles plates, classiquement appelées mèches, comprenant une multitude de filaments. Les fibres présentent par exemple des largeurs d'un huitième de pouce, un quart de pouce ou un demi-pouce (1/8", 1/4" ou 1/2"). Dans la présente, le terme «fibres » désigne également des fibres de plus grande largeur, supérieure à 1/2 pouce, classiquement appelées bandes dans la technologie du placement. Les fibres déposées peuvent être des fibres sèches munies d'un liant, ou des fibres pré-imprégnées de polymère thermodurcissable ou thermoplastique.

La machine peut être prévue pour l'application d'une seule fibre à la fois. De préférence, la machine est prévue pour l'application simultanée de plusieurs fibres, classiquement de largeur inférieure ou égale à 1/2 pouce, la machine comprenant au moins un rouleau d'application apte à appliquer une bande formée de plusieurs fibres sur la surface d'application, un cantre pour le stockage de plusieurs fibres continues, de préférence sous forme de bobines de fibres montées autour de mandrins du cantre, et des moyens d'acheminement pour acheminer les fibres du cantre à la tête d'application. Les moyens d'acheminement comprennent de préférence des tubes flexibles, assemblés en extrémité d'une part à la tête d'application, et d'autre part au cantre.

Dans le cas de fibres de plus d'un demi-pouce de large, classiquement appelées bandes, les fibres sont conditionnées en casettes ou bobines non trancannées, la ou les bobines étant de préférence embarquées dans la tête de la machine, classiquement appelée machine de placement de bande.

Le système de déplacement comprend de préférence un robot poly-articulé formé d'un robot standard de type bras poly-articulé 6 axes ou 4 axes, connu en soi, et classiquement utilisé dans le secteur automobile ou dans le domaine la palettisation. Selon un mode de réalisation le robot est monté fixe par rapport au sol par son embase.

Selon un mode de réalisation, le convoyeur à bande principal est équipé, au niveau d'au moins un système de renvoi, de moyens de séparation aptes à favoriser l'évacuation des pièces de la bande sans fin.

Selon un mode de réalisation, les moyens de séparation comprennent un volet rotatif reposant par un bord d'extrémité sur la bande sans fin, au niveau d'un système de renvoi pour le décollement ou pelage des pièces de la bande sans fin.

Selon un mode de réalisation, un système de renvoi du convoyeur à bande principal comprend un sabre de diamètre réduit, ledit sabre formant lesdits moyens de séparation. Le sabre est de préférence formé d'un rouleau de faible diamètre, de l'ordre de 10 à 50 mm. L'utilisation d'un tel sabre avec un faible diamètre facilite le décollement ou pelage des pièces du brin supérieur de la bande sans fin. En variante, le sabre est formé d'une barre fixe.

Le convoyeur à bande principal peut comprendre une contre-bande ou un rouleau permettant de maintenir la préforme plaquée à plat durant le pelage de la bande sans fin. L'environnement autour de la bande sans fin peut être refroidi pour améliorer la cohésion des préformes, en particulier dans le cas où elles sont réalisées à partir de fibres pré-imprégnées d'un polymère thermodurcissable, et ainsi faciliter leur décollement.

Selon d'autres modes de réalisation,
- la bande sans fin est perforée, l'un des systèmes de renvoi comprend un rouleau de renvoi avec des canaux débouchant sur sa surface cylindrique, et aptes à être alimenté en air comprimé de sorte que le décollement des pièces soit favorisé par le flux d'air passant par les perforations de la bande sans fin, et/ou
- au moins l'un des systèmes de renvoi comprend un rouleau de renvoi muni de doigts régulièrement répartis sur sa surface cylindrique, les doigts s'insérant dans des perforations de la bande sans fin pour écarter les pièces de la bande sans fin lors du passage de ladite bande sans fin sur ledit rouleau.

Selon un mode de réalisation, la machine comprend un système de sécurité, comprenant au moins une barrière périmétrique définissant une zone de sécurité dans laquelle sont placés le système de déplacement, la tête d'application, et le convoyeur à bande lors des opérations d'application, ladite machine comprenant en outre des moyens de transfert pour le transfert des pièces en dehors de ladite zone de sécurité.

Lorsque la machine comprend un cantre pour le stockage d'au moins une fibre continue, de préférence sous forme de bobine, le cantre comprend de préférence un ou plusieurs mandrins pour la réception de bobines de fibre, les axes des mandrins étant accessibles par un opérateur du côté du cantre qui est opposé à la zone de drapage. Les opérations de chargement/déchargement du cantre peuvent être effectuées sans entrer dans la cellule.

La machine comprend par exemple un système de chauffe de type laser, le système de sécurité comprend des parois formant une enceinte de protection, ladite enceinte de protection formant un écran au rayonnement laser, le système de chauffe comprenant une optique laser montée sur la tête d'application, une source laser disposée à l'extérieur de l'enceinte, de préférence avec son système de refroidissement associé, et au moins une fibre optique pour acheminer le faisceau laser, de la source à l'optique laser, ladite fibre traversant la paroi de l'enceinte de manière étanche.

Selon un mode de réalisation, les moyens de transfert comprennent un convoyeur à bande complémentaire apte à recevoir les pièces provenant du convoyeur principal, ledit convoyeur à bande complémentaire s'étendant en dehors de la zone de sécurité en passant par une ouverture de ladite zone de sécurité. Dans le cas d'un système de chauffe de type laser, avec une enceinte de protection, ledit convoyeur à bande complémentaire passe par une ouverture d'une paroi de l'enceinte, de manière étanche aux rayonnements laser.

Selon un mode de réalisation, le convoyeur à bande principal est monté mobile en translation sur un axe linéaire, le convoyeur à bande principal étant déplaçable sur ledit axe linéaire dans une position de transfert dans laquelle le convoyeur à bande principal présente au moins un système de renvoi positionné en dehors de l'enceinte, ladite enceinte présentant une ouverture permettant le déplacement du convoyeur à bande principal dans sa position de transfert.

Selon l'invention, le système de déplacement comprend un système d'entraînement en rotation apte à entraîner en rotation le convoyeur à bande principal autour d'un axe vertical, ledit système de déplacement étant de préférence en outre apte à déplacer la tête selon au moins deux directions horizontales perpendiculaires.

Selon un mode de réalisation, la machine comprend des moyens de chauffage de la plaque, de manière à chauffer au moins le brin supérieur de la bande sans fin, et ainsi faciliter l'accroche du premier pli, la bande sans fin étant de préférence métallique.

Selon un mode de réalisation, ledit convoyeur à bande principal comprend des moyens de maintien aptes à garantir le maintien du brin supérieur en position fixe entre les deux systèmes de renvoi lors des opérations d'application de fibres.

Selon un mode de réalisation, lesdits moyens de maintien comprennent au moins une série de crans présents sur la bande sans fin dans lesquels s'engagent des doigts des deux systèmes de renvoi, les crans étant par exemple formés d'ouvertures, et/ou un système de mise sous vide apte à plaquer par aspiration le brin supérieur de la bande sans fin sur la plaque, le brin supérieur étant ainsi stabilisé sous vide.

Selon un mode de réalisation, le convoyeur à bande principal comprend une bande sans fin perforée. Le convoyeur à bande principal peut alors comprendre un système de mise sous vide de sorte que les fibres drapées soient maintenues par aspiration sur le brin supérieur du convoyeur à bande principal. Suivant le type de fibres appliquées, le polymère d'imprégnation des fibres pénètre dans lesdites perforations, les perforations de la bande pouvant ainsi assurer le maintien mécanique du premier pli.

Selon un mode de réalisation, le convoyeur à bande sans fin comprend une plaque présentant une surface supérieure légèrement convexe, de sorte que le brin supérieur de la bande sans fin soit plaqué contre ladite surface supérieure, une telle plaque formant des moyens de maintien tels que décrits ci-dessus.

La présente invention a également un procédé de réalisation de pièces en matériau composite comprenant l'application de fibres continues conformément à la revendication 14.

Le procédé comprend de préférence l'évacuation du brin supérieur de la pièce de la zone de sécurité, par activation du convoyeur à bande principal, la pièce étant éventuellement soumise à une opération de formage, d'ajout de résine et/ou de cuisson pour obtenir une pièce en matériau composite.

Le procédé selon l'invention comprend de préférence l'application de fibres sur la bande sans fin pour former plusieurs plis de fibres superposés dans différentes orientations, chaque pli étant réalisé par application d'une ou plusieurs bandes selon une orientation sur le brin supérieur ou sur des bandes du pli précédent, chaque bande étant formée d'une ou plusieurs fibres et étant appliquée par déplacement relatif de la tête d'application par rapport au brin supérieur du convoyeur à bande principal.

L'invention sera mieux comprise, et d'autres buts, détails, caractéristiques et avantages apparaîtront plus clairement au cours de la description explicative détaillée qui va suivre de modes de réalisation particuliers actuellement préférés de l'invention, en référence aux dessins schématiques annexés, sur lesquels:
- la figure 1 est une vue schématique de dessus d'une machine d'application de fibres selon un mode de réalisation de l'invention ;
- la figure 2 est une vue schématique de côté de la machine de la figure 1 ;
- la figure 3 est une vue agrandie de dessus du convoyeur à bande de la figure 1 ;
- la figure 4 est une vue schématique en coupe longitudinale du convoyeur à bande de la figure 1,
- la figure 5 est une vue agrandie partielle de la figure 4 ;
- la figure 6 est une vue analogue à celle de la figure 5 illustrant un convoyeur à bande selon une variante de réalisation ;
- la figure 7 est une vue analogue à celle de la figure 4 illustrant une machine d'application de fibres selon un deuxième mode de réalisation, le convoyeur à bande étant dans une position de drapage ; et,
- la figure 8 est une vue analogue à celle de la figure 7, le convoyeur à bande étant dans une position de transfert.

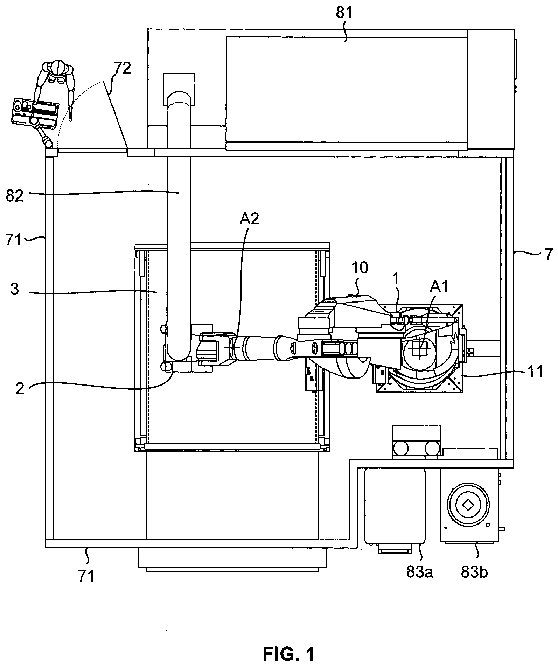

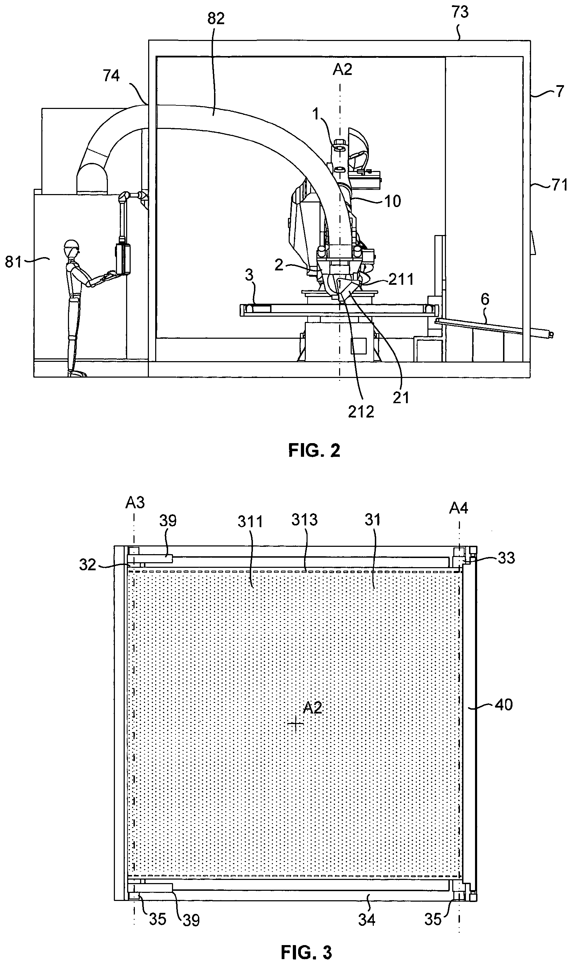

En référence aux figures 1 et 2, la machine d'application de fibres comprend une tête 2 d'application de fibres, un support d'application 3 comprenant une surface d'application, ainsi qu'un système de déplacement 1 permettant d'effectuer un déplacement relatif de la tête par rapport au support d'application pour effectuer des opérations d'application de fibres.

Le système de déplacement 1 comprend ici un robot 10 de type bras poly-articulé six axes, connu en soi, dont le poignet porte en extrémité la tête. Le robot est monté rotatif autour d'un premier axe de rotation A1 vertical par rapport à une embase 11 montée fixe par rapport au sol.

La tête d'application de fibres est une tête de placement de fibres, connue en soi, pour l'application au contact d'une bande formée d'une ou plusieurs fibres sur une surface d'application. La tête comprend un système de compactage 21 comprenant au moins un rouleau d'application, et des moyens de guidage pour guider les fibres vers le rouleau d'application sous la forme d'une bande de fibres, dans laquelle les fibres sont disposées côte à côte, par exemple sensiblement bord à bord. La tête comprend, de part et d'autre du système de guidage, des moyens de coupe pour couper individuellement chaque fibre passant dans le système de guidage, des moyens de blocage pour bloquer chaque fibre venant d'être coupée, et des moyens de réacheminement pour entraîner individuellement chaque fibre, ceci afin de pouvoir à tout moment stopper et reprendre l'application d'une fibre, ainsi que choisir la largeur de la bande.

La tête 2 est équipée d'un système de chauffage, par exemple de type lampe IR ou laser, afin de chauffer le liant de fibres sèches ou le polymère de fibres pré-imprégnées en cours d'application, et ainsi permettre au moins une adhésion des fibres des différents plis et assurer la cohésion de l'ensemble de plis de la préforme. Le système de chauffage chauffe les fibres avant leur application sur la surface d'application, ainsi que la surface d'application ou les fibres préalablement déposées, en amont du rouleau par rapport à la direction d'avancement de la tête.

La machine comprend également un cantre 81 pour le stockage de fibres continues, de préférence sous forme de bobines de fibres montées autour de mandrins, et des moyens d'acheminement 82 pour acheminer les fibres du cantre à la tête d'application. Les moyens d'acheminement 82 comprennent de préférence des tubes flexibles, assemblés en extrémité d'une part à la tête 2 et d'autre part au cantre 81, en une ou plusieurs rangées parallèles entre elles. Cet assemblage est par exemple réalisé au moyen de cassettes, telles que décrites dans le document brevet WO2012/160270. Les tubes sont rassemblés dans une gaine flexible, chaque tube étant apte à recevoir dans son passage interne une fibre. En variante, les moyens d'acheminement comprennent des systèmes de poulies.

La machine comprend un système de sécurité 7, tel que défini dans le document WO2012/126815. Ce système comprend au moins une barrière périmétrique définissant ici une enceinte de protection dans laquelle sont placés le robot portant la tête d'application des fibres ainsi que le support d'application 3. Le cantre 81 est placé à l'extérieur, pour permettre des opérations de chargement et déchargement sans entrer dans l'enceinte.

Dans le mode illustré, la machine est prévue plus particulièrement pour l'application de fibres sèches ou de fibres pré-imprégnées d'un polymère thermoplastique, et comprend un système de chauffe de type laser, l'enceinte de protection formant un écran au rayonnement laser. L'enceinte comprend des parois latérales 71, dont l'une est équipée d'une porte d'accès 72, et une paroi de plafond 73, représentée de manière schématique sur la figure 2. Une ouverture 74 est prévue dans une paroi latérale pour le passage, de manière étanche au rayonnement laser, des moyens d'acheminement 82 à travers l'enceinte de protection. Le système de chauffe comprend une optique laser (non représentée) montée sur la tête d'application et une source laser 83a disposée à l'extérieur de l'enceinte, avec son système de refroidissement 83b associé. Au moins une fibre optique (non représentée) est prévue pour acheminer le faisceau laser de la source à l'optique laser, en traversant la paroi de l'enceinte de manière étanche.

La machine peut comprendre une tête d'application de fibres, telle qu'elle est décrite dans le document brevet FR 15/02280, déposé le 28 octobre 2015 par la demanderesse. La tête comprend une partie fixe et une partie mobile. Elle est montée par sa partie fixe au robot selon un axe d'assemblage confondu avec le dernier axe du poignet du robot. La partie mobile, qui comprend le système de compactage et les moyens de guidage, est montée coulissante sur la partie fixe selon un plan de coulissement. L'axe d'assemblage et le plan de coulissement sont parallèles entre eux, et la partie mobile est montée sur la partie fixe de sorte que l'axe de rotation du rouleau de compactage est disposé perpendiculairement au plan de coulissement, et du côté du plan de coulissement qui est opposé à l'axe d'assemblage. Les tubes flexibles sont assemblés en extrémité à la partie fixe de tête.

La tête est par exemple une tête bidirectionnelle avec un système de compactage manœuvrable entre deux positions par rapport aux moyens de guidage pour appliquer les fibres dans deux directions opposées, de préférence une tête bidirectionnelle telle que décrite dans le document brevet FR15/02283 déposé le 28 octobre 2015 par la demanderesse, comprenant un système de compactage 21 à deux rouleaux 211,212.

La configuration de la machine correspond par exemple celle décrite dans le document brevet FR15/02553, déposé le 8 décembre 2015, pour obtenir des vitesses de drapage élevées. La tête est par exemple prévue pour recevoir huit fibres, et permettre l'application de bandes de 1 à 8 fibres de 6,35 mm (1/4 de pouce) de large.

Selon l'invention, en référence en particulier aux figures 3 à 5, le support d'application 3 est formé ici d'un convoyeur à bande principal, monté pivotant autour d'un axe vertical A2.

Le convoyeur à bande comprend une bande sans fin 31 montée entre deux systèmes de renvoi, dont un premier système de renvoi, dit aval, formé d'un rouleau de renvoi aval 32, et un second système de renvoi, dit amont, formé d'un rouleau de renvoi amont 33. La bande sans fin est par exemple une bande métallique de 0,2 à 0,5 mm d'épaisseur, présentant une surface extérieure polie. Le convoyeur est de type convoyeur droit, les rouleaux de renvoi amont et aval 32, 33 étant montés rotatifs autour d'axes de rotation A3, A4 disposés parallèlement entre eux. La bande sans fin présente entre les deux rouleaux, un brin supérieur 311 qui constitue une surface d'application plane, et un brin inférieur 312. Les rouleaux de renvoi sont montés rotatifs par leur extrémité sur un plateau support 34 via des supports de montage 35. Le plateau support 34 est monté sur un système d'entraînement en rotation 36 posé au sol, pour entraîner en rotation le convoyeur à bande autour de l'axe A2. Ce système d'entraînement en rotation constitue un élément du système de déplacement de la machine.

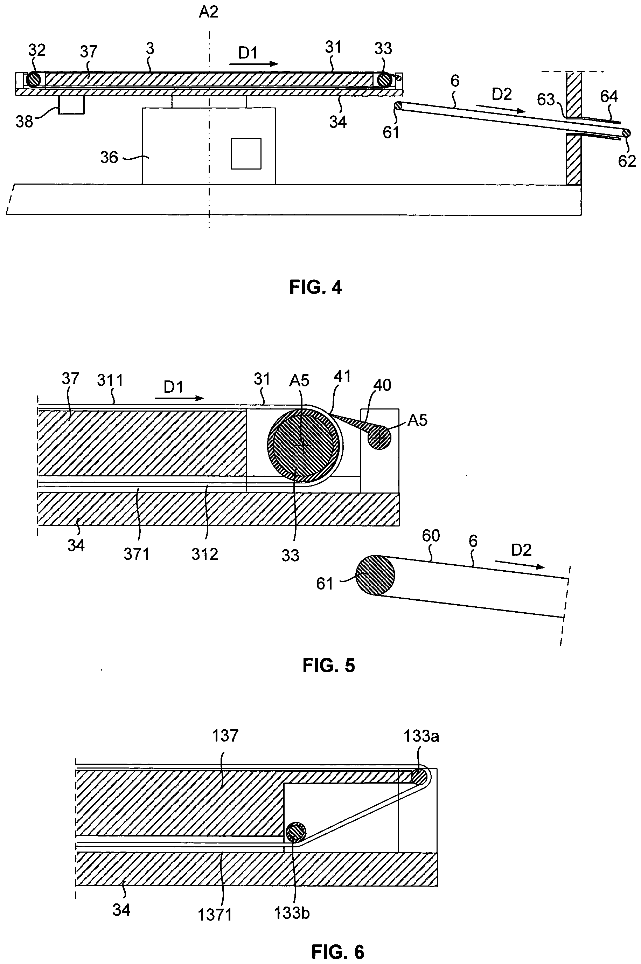

Une plaque 37, également appelée marbre, est posée sur le plateau support 34 entre les deux rouleaux de renvoi. Le brin supérieur 311 repose sur la face supérieure de la plaque 37. La plaque présente sur sa face inférieure un renfoncement 371 pour le passage du brin inférieur 312, la plaque reposant sur le plateau support par deux portions latérales formées de part et d'autre du renfoncement. Le rouleau de renvoi aval est motorisé, un moteur 38 pouvant être commandé par une unité de contrôle de la machine pour assurer son entraînement en rotation, dans le sens horaire sur la figure 4, de sorte que le brin supérieur 311 défile du rouleau de renvoi amont vers le rouleau de renvoi aval, dans la direction D1. Le rouleau de renvoi amont est entraîné par des systèmes d'entraînement 39 reliés mécaniquement au moteur 3 et à chaque portion d'extrémité dudit rouleau de renvoi amont.

Des moyens tendeurs (non représentés), connus en soi, par exemple de type pneumatiques, sont de préférence prévus pour maintenir tendue la bande sans fin entre les deux rouleaux de renvoi, lesdits moyens agissant par exemple sur le rouleau de renvoi aval et/ou amont pour solliciter les rouleaux dans une position écartée.

De préférence, la plaque du convoyeur à bande est équipée de moyens de chauffage, formé par exemple de résistances intégrées à la plaque, afin de faciliter l'accroche du premier pli.

Afin de garantir une position fixe de la bande sans fin sur la plaque lors des opérations de drapage, la plaque 37 est munie d'une pluralité de canaux d'aspiration, débouchant sur la face supérieure de la plaque, et connectés à des moyens de mise sous vide (non représentés). Le brin supérieur 311 de la bande sans fin peut ainsi être maintenu par aspiration contre la surface supérieure de la plaque. L'aspiration permet de plaquer la bande sans fin contre la plaque et ainsi d'assurer un chauffage efficace de la bande par la plaque chauffée.

La bande sans fin présente avantageusement une multitude de perforations, tel qu'illustré schématiquement sur la figure 3, permettant le maintien du premier pli par aspiration. Par ailleurs, dans le cas de fibres pré-imprégnées, en particulier de polymère thermoplastique, les perforations garantissent un maintien mécanique du premier pli, le polymère des fibres du premier pli s'insérant dans lesdites perforations et formant des picots. A titre d'exemple, la bande présente des perforations d'environ 1 mm de diamètre, régulièrement répartis, séparés les uns des autres d'une distance comprise entre 2 et 5 mm.

La bande sans fin peut également présenter le long de chacun de ses bords longitudinaux une série d'ouvertures 313 disposées à espace régulier selon une ligne. Les rouleaux de renvoi, sont munis de dents qui s'engagent dans lesdites ouvertures pour entraîner sans glissement la bande sans fin, et maintenir en position la bande lorsque la bande sans fin est à l'arrêt.

Pour faciliter le décollement des préformes de la bande sans fin, le convoyeur est équipé au niveau de son rouleau de renvoi aval 33, d'un volet 40 ou racleur, monté pivotant autour d'un axe A5, parallèle aux axes A3 et A4 des rouleaux de renvoi et venant en appui par son bord d'extrémité 41 contre la bande sans fin. Des moyens de rappel élastique peuvent être prévus pour maintenir élastiquement le volet en appui contre la bande sans fin.

Sur les figures, le convoyeur à bande est dans une position dite d'évacuation, dans laquelle les axes de rotation des rouleaux de renvoi sont disposés parallèlement, de part et d'autre du plan passant par les axes A1 et A2.

La machine comprend en outre des moyens de transfert comprenant un convoyeur à bande secondaire 6 comprenant une bande sans fin 60 montée entre un rouleau de renvoi amont 61 et un rouleau de renvoi aval 62, apte à récupérer sur son brin supérieur les pièces évacuées du convoyeur à bande principal 3. Le rouleau de renvoi 61 amont est disposé en dessous du rouleau de renvoi aval 33 du convoyeur à bande principal, lorsque ce dernier est en position d'évacuation. Le convoyeur passe par une ouverture 63 de la paroi latérale 71 de l'enceinte et son rouleau de renvoi aval 62 est disposé à l'extérieur de l'enceinte. Ladite ouverture est prolongée du côté intérieur et/ou extérieur de l'enceinte, par exemple du côté extérieur comme illustré sur les figures, d'un conduit tubulaire 64, ceci afin de garantir l'étanchéité lumineuse de l'enceinte aux rayonnements laser. Ce convoyeur à bande complémentaire est motorisé, de sorte que le brin supérieur défile du rouleau de renvoi amont 61 vers le rouleau de renvoi aval 62, dans la direction D2, et ainsi permettre l'évacuation des pièces tombant sur ledit brin supérieur.

La machine selon l'invention peut être utilisée pour la réalisation de pièces intermédiaires planes, appelées préformes, par drapage à plat de plusieurs plis de fibres, superposés dans différentes orientations, selon un empilement défini, sur le brin supérieur du convoyeur 3. Chaque pli est réalisé par l'application de plusieurs bandes parallèlement les unes aux autres, chaque bande étant formée de plusieurs fibres. Les orientations correspondent à différents angles de rotation du convoyeur 3 autour de son axe de rotation A2. L'application d'une bande procède par exemple d'un déplacement de la tête d'application 1 dans une direction, sensiblement perpendiculaire au plan passant par les axes A1 et A2.

Lors du drapage, les moyens de mise sous vide sont activés afin d'assurer le maintien en position du brin supérieur, et favoriser également l'accroche du premier pli. Le plateau est chauffé par les moyens de chauffage, facilitant la fusion du liant des fibres du premier pli et ainsi l'accroche du premier pli.

Après drapage de la préforme sur le brin supérieur, le convoyeur est amené dans sa position d'évacuation, l'aspiration de la bande est stoppée, et le convoyeur à bande est activé pour déplacer le brin supérieur dans la direction D1. Le convoyeur à bande complémentaire est également activé pour déplacer le brin supérieur dans la direction D2, en synchronisme avec celui du convoyeur à bande principal. La préforme est décollée du brin supérieur par le volet 40, et est évacué sur le convoyeur 6, ce dernier évacuant la préforme hors de l'enceinte. La préforme est par la suite récupérée au niveau du rouleau de renvoi aval 62, par exemple dans un réceptacle ou sur un autre convoyeur.

Suivant la dimension des préformes, les préformes sont drapées puis évacuées une par une. Dans le cas de préformes de plus petites dimensions, plusieurs préformes peuvent être drapées en même temps sur le brin supérieur, puis évacuées en même temps.

A titre d'exemple, la tête est utilisée pour la réalisation d'une préforme sèche plane, à partir de fibres sèches munies d'un liant classiquement appelé « binder », pour conférer un caractère collant aux fibres lors du drapage et assurer la cohésion de la préforme. Le liant est constitué d'un premier polymère sous forme de poudre et/ou d'un ou plusieurs voiles. Les fibres sont par exemple des fibres de carbone unidirectionnelles, plates continues, de type mèches, comprenant une multitude de fils ou filaments de carbone, avec un liant thermoplastique sous forme de poudre, présent en quantité de l'ordre de 2% en poids. Les préformes récupérées en dehors de l'enceinte peuvent par la suite être soumises à une étape de formage et/ou une étape d'infusion de résine et/ou une étape de cuisson pour obtenir des pièces en matériau composite.

Selon une autre variante de réalisation, la préforme est réalisée à partir de fibres pré-imprégnées d'un polymère thermoplastique ou thermodurcissable. Les fibres sont par exemple des fibres de carbone, plates continues, de type mèches, comprenant une multitude de fils ou filaments de carbone, avec un polymère thermoplastique, présent en quantité de l'ordre de 40% en poids, ce polymère constituant la matrice de la pièce finale. Les préformes en sortie d'enceinte pourront être soumises à une opération de formage à chaud, et éventuellement à une opération d'imprégnation et/ou consolidation, pour obtenir une pièce composite avec sa forme tridimensionnelle finale souhaitée. Dans le cas de fibres pré-imprégnées, en particulier d'un polymère thermoplastique, la rigidité des préformes peut permettre un décollement des préformes au niveau du rouleau de renvoi aval, sans nécessiter de volet 40.

La figure 6 illustre une variante de réalisation dans laquelle le volet formant les moyens de séparation est remplacé par un système de renvoi aval comprenant un sabre 133a tournant formé d'un rouleau de diamètre réduit, facilitant le décollement ou pelage des préformes du brin supérieur. Ce rouleau présente par exemple un diamètre compris entre 10 et 50 mm, par exemple de l'ordre de 30 mm. Le système de renvoi comprend un rouleau de renvoi aval secondaire 133b pour guider le brin inférieur entre le plateau support 34 et la plaque 137, en entrée du renfoncement 1371. En variante, le système de renvoi comprend un sabre fixe formé par exemple par une barre fixe à surface concave.

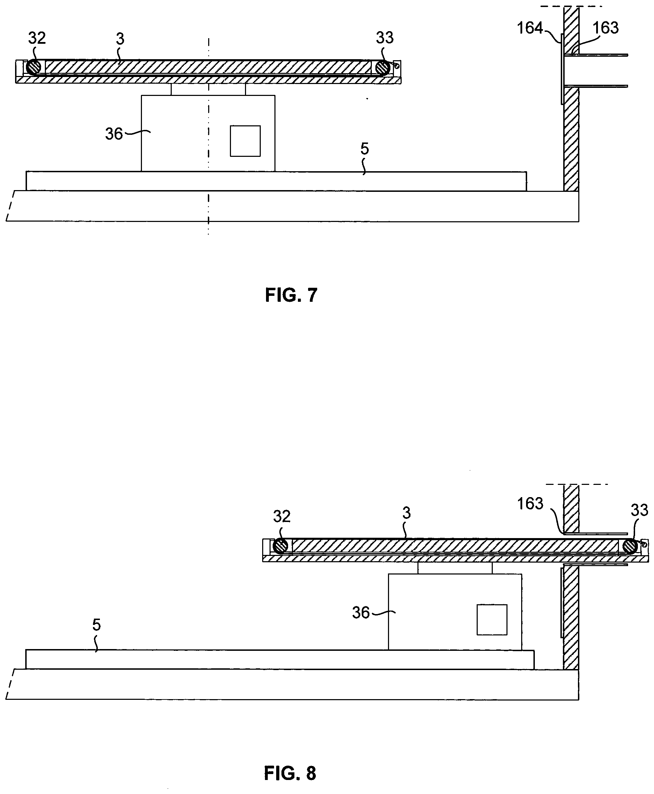

Selon un autre mode de réalisation, la surface supérieure de la plaque 37 sur laquelle repose le brin supérieur de la bande sans fin est légèrement convexe, de sorte que le brin supérieur soit plaqué contre cette surface supérieure. L'utilisation d'une telle plaque légèrement bombée complète ou remplace le maintien par aspiration de la bande sans fin décrit précédemment pour garantir le chauffage de la bande et son maintien en position lors du drapage. La plaque présente par exemple une flèche d'environ 5 mm par mètre de corde, soit une flèche d'environ 10 mm pour un convoyeur à bande de 2 m de longueur entre ses deux rouleaux de renvoi. Les figures 7 et 8 illustrent un autre mode de réalisation, dans lequel le convoyeur à bande complémentaire précité pour le transfert des pièces en dehors de l'enceinte est remplacé par un convoyeur à bande principal, comme décrit précédemment, qui est par ailleurs monté mobile sur un axe linéaire. Le convoyeur à bande comprend alors comme précédemment un système d'entraînement en rotation 36 qui est ici monté mobile en translation sur un rail linéaire 5. Le convoyeur est déplaçable sur le rail entre une position de drapage illustrée à la figure 7, dans laquelle le plan passant les axes Al et A2 est perpendiculaire au rail 5, et une position de transfert illustrée à la figure 8, dans laquelle le convoyeur passe par une ouverture 163 de la paroi latérale 71 de l'enceinte, et son rouleau de renvoi aval 33 est disposé à l'extérieur de l'enceinte. L'ouverture est munie d'un volet de fermeture 164 déplaçable, de préférence de manière automatique, entre une position fermée, garantissant l'étanchéité lumineuse de l'enceinte, et une position ouverte pour le passage du convoyeur.

Dans ce mode de réalisation, le convoyeur à bande peut éventuellement être déplacé le long du rail lors des opérations de drapage, le système d'entraînement en rotation monté sur le rail faisant partie du système de déplacement de la machine.

Selon un autre mode de réalisation, le robot de type poly-articulé précité est remplacé par un système de déplacement de type portique sur lequel est montée la tête, ledit portique étant apte à déplacer la tête selon deux directions horizontales parallèles pour réaliser les opérations de drapage. Le portique peut également être apte à déplacer la tête dans une direction verticale pour la mise en contact de la tête avec la surface d'application. En variante, cette mise en contact est assurée par le ou les vérins de compactage de la tête qui contrôlent le mouvement de la partie mobile par rapport à la partie fixe de la tête.

Bien que l'invention ait été décrite en liaison avec différents modes de réalisation particuliers, il est bien évident qu'elle n'y est nullement limitée et qu'elle comprend tous les équivalents techniques des moyens décrits ainsi que leurs combinaisons si celles-ci entrent dans le cadre de l'invention.

## Revendications

1. Machine d'application de fibres pour la réalisation de pièces en matériau composite comprenant :
- un support d'application comprenant un convoyeur à bande (3) principal comprenant une bande sans fin (31) montée entre au moins deux systèmes de renvoi (32, 33), dont au moins un système de renvoi motorisé, ladite bande comprenant un brin supérieur (311) constituant une surface d'application, et une plaque (37) disposée entre les deux systèmes de renvoi sur laquelle le brin supérieur repose lors de l'application de fibres,
- une tête d'application (2) de fibres avec un système de compactage comprenant au moins un rouleau d'application pour l'application au contact de fibres la surface d'application pour réaliser une pièce, et
- un système de déplacement (1) apte à effectuer un déplacement relatif de tête par rapport à la surface d'application,
ladite machine comprenant une unité de commande apte à commander le système de renvoi motorisé pour évacuer de la bande sans fin la ou les pièces présentes sur ladite bande sans fin,
**caractérisée en ce que** le système de déplacement comprend un système d'entraînement en rotation apte à entraîner en rotation le convoyeur à bande (3) principal autour d'un axe vertical (A2).

2. Machine selon la revendication 1, **caractérisée en ce que** le convoyeur à bande (3) principal est équipé de moyens de séparation (30, 133a) aptes à favoriser l'évacuation des pièces de la bande sans fin (31).

3. Machine selon la revendication 2, **caractérisée en ce que** les moyens de séparation comprennent un volet (40) rotatif reposant par un bord d'extrémité sur la bande sans fin (31), au niveau d'un système de renvoi (33).

4. Machine selon la revendication 2, **caractérisée en ce qu'**un système de renvoi (33) du convoyeur à bande (3) principal comprend un sabre (133a) de diamètre réduit, ledit sabre formant lesdits moyens de séparation.

5. Machine selon l'une des revendications 1 à 4, **caractérisée en ce qu'**elle comprend un système de sécurité (7), comprenant au moins une barrière périmétrique définissant une zone de sécurité dans laquelle sont placés le système de déplacement (1), la tête d'application (2), et le convoyeur à bande (3) lors des opérations d'application, ladite machine comprenant en outre des moyens de transfert (6, 5) pour le transfert des pièces en dehors de ladite zone de sécurité.

6. Machine selon la revendication 5, **caractérisée en ce que** les moyens de transfert comprennent un convoyeur à bande (6) complémentaire apte à recevoir les pièces provenant du convoyeur principal, ledit convoyeur à bande complémentaire s'étendant en dehors la zone de sécurité en passant par une ouverture (63) de ladite zone de sécurité.

7. Machine selon la revendication 5, **caractérisée en ce que** le convoyeur à bande (3) principal est monté mobile en translation sur un axe linéaire (5), le convoyeur à bande principal étant déplaçable sur ledit axe linéaire dans une position de transfert dans laquelle le convoyeur à bande principal présente au moins un système de renvoi (33) positionné en dehors de l'enceinte, ladite enceinte présentant une ouverture (163) permettant le déplacement du convoyeur à bande principal dans sa position de transfert.

8. Machine selon l'une des revendications 1 à 7, **caractérisée en ce qu'**elle comprend des moyens de chauffage de la plaque (37), de manière à chauffer au moins le brin supérieur de la bande sans fin.

9. Machine selon la revendication 1 à 8, **caractérisée en ce que** ledit convoyeur à bande principal comprend des moyens de maintien aptes à garantir le maintien du brin supérieur (311) en position fixe entre les deux systèmes de renvoi lors des opérations d'application de fibres.

10. Machine selon la revendication 9, **caractérisée en ce que** lesdits moyens de maintien comprennent
- au moins une série de crans (313) présents sur la bande sans fin (31) dans lesquels s'engagent des doigts des deux systèmes de renvoi, et/ou
- un système de mise sous vide apte à plaquer par aspiration le brin supérieur (313) de la bande sans fin sur la plaque.

11. Machine selon l'une des revendications 1 à 10, **caractérisée en ce que** le convoyeur à bande principal comprend une bande sans fin perforée.

12. Machine selon la revendication 11, **caractérisée en ce que** le convoyeur à bande principal comprend un système de mise sous vide, de sorte que les fibres drapées soient maintenues par aspiration sur le brin supérieur du convoyeur à bande principal.

13. Machine selon l'une des revendications 1 à 12, **caractérisée en ce que** le convoyeur à bande sans fin comprend une plaque présentant une surface supérieure convexe.

14. Procédé de réalisation de pièces en matériau composite comprenant l'application de fibres continues sur une surface d'application, **caractérisé en ce que** ladite application est réalisée au moyen d'une machine d'application de fibres selon l'une des revendications 1 à 13, ledit procédé comprend l'application de fibres sur le brin supérieur (311) de la bande sans fin, reposant à l'arrêt sur la plaque (37), pour réaliser une pièce, ledit procédé comprenant en outre l'évacuation du brin supérieur de la pièce par activation du convoyeur à bande principal.

## Patentansprüche

1. Faserapplikationsmaschine zur Herstellung von Teilen aus Verbundmaterial, umfassend:
- eine Applikationsunterlage, umfassend ein Hauptförderband (3), umfassend ein Endlosband (31), das zwischen mindestens zwei Umlenksystemen (32, 33) angebracht ist, von denen mindestens ein Umlenksystem motorisiert ist, wobei das Band einen Obergurt (311) umfasst, der eine Applikationsfläche darstellt, und eine Platte (37), die zwischen den zwei Umlenksystemen angeordnet ist, auf welcher der Obergurt bei der Applikation von Fasern ruht,
- einen Faser-Applikationskopf (2) mit einem Kompaktierungssystem, umfassend mindestens eine Applikationswalze für die Applikation der Applikationsfläche im Kontakt mit den Fasern, um ein Teil herzustellen, und
- ein Verlagerungssystem (1), das imstande ist, eine relative Verlagerung des Kopfes in Bezug auf die Applikationsfläche durchzuführen,
wobei die Maschine eine Steuereinheit umfasst, die imstande ist, das motorisierte Umlenksystem zu steuern, um von dem Endlosband das oder die Teile zu entfernen, die auf dem Endlosband vorhanden sind,
**dadurch gekennzeichnet, dass** das Verlagerungssystem ein Rotationsantriebssystem umfasst, das imstande ist, das Hauptförderband (3) um eine vertikale Achse (A2) rotatorisch anzutreiben.

2. Maschine nach Anspruch 1, **dadurch gekennzeichnet, dass** das Hauptförderband (3) mit Trennmitteln (30, 133a) ausgestattet ist, die imstande sind, das Entfernen der Teile von dem Endlosband (31) zu begünstigen.

3. Maschine nach Anspruch 2, **dadurch gekennzeichnet, dass** die Trennmittel einen rotierenden Flügel (40) umfassen, der im Bereich eines Umlenksystems (33) mit einem Endrand auf dem Endlosband (31) ruht.

4. Maschine nach Anspruch 2, **dadurch gekennzeichnet, dass** ein Umlenksystem (33) des Hauptförderbands (3) ein Schwert (133a) mit reduziertem Durchmesser umfasst, wobei das Schwert die Trennmittel bildet.

5. Maschine nach einem der Ansprüche 1 bis 4, **dadurch gekennzeichnet, dass** sie ein Sicherheitssystem (7) umfasst, umfassend mindestens eine Umfangsbarriere, die eine Sicherheitszone festlegt, in welcher das Verlagerungssystem (1), der Applikationskopf (2) und das Förderband (3) während der Applikationsoperationen platziert sind, wobei die Maschine ferner Transfermittel (6, 5) für den Transfer der Teile außerhalb der Sicherheitszone umfasst.

6. Maschine nach Anspruch 5, **dadurch gekennzeichnet, dass** die Transfermittel ein komplementäres Förderband (6) umfassen, das imstande ist, die von dem Hauptförderer kommenden Teile aufzunehmen, wobei sich das komplementäre Förderband außerhalb der Sicherheitszone durch eine Öffnung (63) der Sicherheitszone erstreckt.

7. Maschine nach Anspruch 5, **dadurch gekennzeichnet, dass** das Hauptförderband (3) auf einer linearen Achse (5) translatorisch beweglich angebracht ist, wobei das Hauptförderband auf der linearen Achse in eine Transferposition verlagerbar ist, in welcher das Hauptförderband mindestens ein Umlenksystem (33) aufweist, das außerhalb des Gehäuses positioniert ist, wobei das Gehäuse eine Öffnung (163) aufweist, welche die Verlagerung des Hauptförderbandes in seine Transferposition erlaubt.

8. Maschine nach einem der Ansprüche 1 bis 7, **dadurch gekennzeichnet, dass** sie Heizmittel der Platte (37) umfasst, um mindestens den Obergurt des Endlosbandes zu heizen.

9. Maschine nach Anspruch 1 bis 8, **dadurch gekennzeichnet, dass** das Hauptförderband Haltemittel umfasst, die imstande sind, den Halt des Obergurts (311) in fester Position zwischen den zwei Umlenksystemen bei den Faserapplikationsoperationen zu garantieren.

10. Maschine nach Anspruch 9, **dadurch gekennzeichnet, dass** die Haltemittel umfassen
- mindestens eine Reihe von Rasten (313), die auf dem Endlosband (31) vorhanden sind, in welche Finger der zwei Umlenksysteme eingreifen, und/oder
- ein Vakuumsystem, das imstande ist, den Obergurt (313) des Endlosbandes durch Ansaugen auf der Platte anzudrücken.

11. Maschine nach einem der Ansprüche 1 bis 10, **dadurch gekennzeichnet, dass** das Hauptförderband ein perforiertes Endlosband umfasst.

12. Maschine nach Anspruch 11, **dadurch gekennzeichnet, dass** das Hauptförderband ein Vakuumsystem umfasst, so dass die drapierten Fasern durch Ansaugen auf dem Obergurt des Hauptförderbandes gehalten werden.

13. Maschine nach einem der Ansprüche 1 bis 12, **dadurch gekennzeichnet, dass** der Endlosband-Förderer eine Platte umfasst, die eine konvexe obere Fläche aufweist.

14. Verfahren zur Herstellung von Teilen aus Verbundmaterial, umfassend das Applizieren von kontinuierlichen Fasern auf eine Applikationsfläche, **dadurch gekennzeichnet, dass** die Applikation mittels einer Faserapplikationsmaschine nach einem der Ansprüche 1 bis 13 durchgeführt wird, wobei das Verfahren die Applikation von Fasern auf den Obergurt (311) des Endlosbandes, das bei Stopp auf der Platte (37) ruht, umfasst, um ein Teil herzustellen, wobei das Verfahren ferner das Entfernen des Obergurts von dem Teil durch Aktivieren des Hauptförderbandes umfasst.

## Claims

1. Fibre application machine for the production of composite material parts comprising:
- an application support comprising a main belt conveyor (3) comprising an endless belt (31) mounted between at least two return systems (32, 33), including at least one motorized return system, said belt comprising an upper strand (311) constituting an application surface, and a plate (37) disposed between the two return systems on which the upper strand rests when fibres are applied,
- a fibre application head (2) with a compaction system comprising at least one application roller for applying by contact the fibres onto the application surface to produce a part, and
- a displacement system (1) able to perform a relative displacement of the head with respect to the application surface,
said machine comprising a control unit able to control the motorized return system for evacuating from the endless belt the part or parts present on said endless belt,
**characterized in that** the displacement system comprises a rotational drive system able to rotate the main belt conveyor (3) about a vertical axis (A2).

2. Machine according to claim 1, **characterized in that** the main belt conveyor (3) is equipped with separating means (30, 133a) able to facilitate the evacuation of parts from the endless belt (31).

3. Machine according to claim 2, **characterized in that** the separating means comprise a rotating flap (40) resting by an end edge on the endless belt (31) at a return system (33).

4. The machine according to claim 2, **characterized in that** a return system (33) of the main belt conveyor (3) comprises a tapered roller (133a) of reduced diameter, said tapered roller forming said separating means.

5. Machine according to one of claims 1 to 4, **characterized in that** it comprises a security system (7), comprising at least one perimeter barrier defining a security zone in which the displacement system (1), the application head (2), and the belt conveyor (3) are placed during application operations, said machine further comprising transfer means (6, 5) for transferring the parts outside said security zone.

6. Machine according to claim 5, **characterized in that** the transfer means comprise a complementary belt conveyor (6) adapted to receive parts from the main conveyor, said complementary belt conveyor extending outside the safety zone through an opening (63) in said safety zone.

7. The machine according to claim 5, **characterized in that** the main belt conveyor (3) is mounted movable in translation on a linear axis (5), the main belt conveyor being displaceable on said linear axis in a transfer position in which the main belt conveyor has at least one return system (33) located outside the enclosure, said enclosure having an opening (163) allowing the main belt conveyor to move into its transfer position.

8. Machine according to one of claims 1 to 7, **characterized in that** it comprises means for heating the plate (37), so as to heat at least the upper strand of the endless belt.

9. Machine according to claim 1 to 8, **characterized in that** said main belt conveyor comprises holding means able to ensure that the upper strand (311) is held in a fixed position between the two return systems during fibre application operations.

10. The machine according to claim 9, **characterized in that** said holding means comprises
- at least one series of notches (313) present on the endless belt (31) in which fingers of both return systems engage, and/or
- a vacuum system capable of vacuum tackling the upper section (313) of the endless belt onto the plate.

11. A machine according to one of claims 1 to 10, **characterized in that** the main belt conveyor comprises a perforated endless belt.

12. The machine according to claim 11, **characterized in that** the main belt conveyor comprises a vacuum system, so that the laid up fibres are held by vacuum on the upper strand of the main belt conveyor.

13. A machine according to one of claims 1 to 12, **characterized in that** the endless belt conveyor comprises a plate having a convex upper surface.

14. A method for producing composite material parts comprising applying continuous fibres onto an application surface, **characterised in that** said application is made by means of a fibre application machine according to one of claims 1 to 13, said method comprises applying fibres onto the upper strand (311) of the endless belt, which lies stationary on the plate (37), to produce a part, said method further comprising evacuating the part from the upper strand by actuating the main belt conveyor.
